Europäisches Patentamt

(19) European Patent Office                    (11) Publication number:                    **0 196 859**

Office européen des brevets                                                            **A2**

(12) **EUROPEAN PATENT APPLICATION**

(21) Application number: **86302182.0**            (51) Int. Cl.⁴: **F 16 D 3/04**

(22) Date of filing: **25.03.86**

(30) Priority: **25.03.85 GB 8507720**             (71) Applicant: **ASSOCIATED ELECTRICAL INDUSTRIES LIMITED**
                                                 **1 Stanhope Gate**
                                                 **London W1A 1EH(GB)**

(43) Date of publication of application:           (72) Inventor: **Dowling, John**
**08.10.86 Bulletin 86/41**                      **Apsley Cottage 2 Apsley Close**
                                                 **Bowdon Altrincham WA14 3AH(GB)**

(84) Designated Contracting States:                (74) Representative: **Keppler, William Patrick**
**DE FR GB**                                     **Central Patent Department Wembley Office The General**
                                                 **Electric Company, p.l.c. Hirst Research Centre East Lane**
                                                 **Wembley Middlesex HA9 7PP(GB)**

(54) Torque coupling.

㊐ A coupling for transmitting torque between two substantially parallel shafts (particularly a driving shaft and a wheelset of a railway bogie) is arranged to accommodate a variable lateral displacement between the shafts, arising for example from oscillation of one of the shafts on its suspension. The coupling comprises a floating ring element (F) which is coupled to respective radially extending arms (LP, LQ) on the shafts (P, Q) by orthogonal pairs of parallel links (L). The links and ring element rotate with the shafts substantially in a common radial plane and the connection points between the links and ring element are so disposed that in use, the centre of the ring element orbits the shaft axes and, provided that the shaft axes are nearly coincident, the configuration of the ring element and links is substantially unchanged during the rotation.

Fig 6.

TP/2572/EPC

-1-

## Torque coupling

The present invention relates to couplings for transmitting torque between two substantially parallel shafts which are subject in use to variable relative lateral displacements. The invention is particularly but not exclusively applicable to couplings for applying driving and braking torque to powered wheelsets on railway bogies.

The wheelset on a powered bogie should be able to accept driving or braking torque whilst being free, subject to the appropriate suspension stiffnesses, to execute the following movements:

(i) vertical movements relative to the bogie frame as the primary suspension responds to uneven level at the rail running surface,

(ii) small yawing movements in plan view of the wheelset in response to curved track, and

(iii) small endwise movement of the wheelset along the axis of its axle.

A further requirement of such bogies during the application of traction or braking power to the wheelset is that no direct change in vertical load, or in side-to-side wheel load, or reaction load, should be imposed on the wheelset. Thus, driving or braking effort should be transmitted as a pure torque.

A known coupling capable of transmitting pure torque from a rigid bogie mounting to the bogie wheelset utilises a floating ring element provided with four axially extending pivots distributed in a rectangular array around its circumference. The drive shaft and the shaft of the wheelset each incorporate a pivot carrier, each pivot carrier being provided with a pair of axially extending, diametrically opposite pivots. Each of these pairs of pivots is connected by oppositely directed parallel links to a diagonally opposite pair of the pivots on the floating ring element. When the shaft axes are coincident, the pivot axes are distributed in a regular octagonal array. In use, the pair of links from one pivot carrier are under tension while the other pair of links are under compression, according to the sense of the applied driving or braking torque.

As will subsequently be described, the geometry of this known coupling is such that any lateral displacement of the wheelset axis relative to the drive axis upsets the symmetry of the octagonal array of pivot axes and could only be accommodated by simultaneously lengthening the links. In practive this error is taken up by thick rubber bushes at the pivots. In a typical application using links of 250mm length, a rise and fall of $\pm$ 25mm of the primary vertical suspension corresponds to a length error of $\pm$ 3mm at each of the four links, causing $\pm$ 1.5mm radial deflection at each of the eight bushes during each revolution. Consequently the effective stiffness of the primary suspension is increased significantly and the life of the rubber bushes is limited. Furthermore because the parallel links coupled to the wheelset are both compressed or both under tension, any endwise movement of the wheelset along its axis will cause an interaction between the vertical suspension stiffness and the lateral suspension stiffness, thereby hindering control of the wheelset, particularly at high speeds.

A further known coupling capable of transmitting drive between laterally offset shafts, · known as the Schmidt coupling, comprises a floating ring supported between the ends of the driving and driven shafts but with its centre offset from both of them. The floating ring is provided with three regularly distributed pivot points on each opposite face. The driving shaft and driven shaft each terminate in pivot carriers, each pivot carrier incorporating an array of three pivot points centred on the shaft axis and identical to the array on the confronting face of the floating ring. Identical parallel links connect the pivots on each pivot to the corresponding pivots on the ring, so that the latter rotates about its own axis and thereby transmits drive from the driving shaft to the driven shaft. However, since the parallel links all rotate about the pivot points on the ring, irrespective of the lateral offset between the shafts, relatively expensive journal bearings (such as needle roller bearings) are required at all the pivot points. Furthermore the position of the rotation axis of the floating ring is not defined when the axes of the driving and driven shafts are coincident.

An object of the present invention is to provide a simple coupling capable of exactly accommodating a lateral offset between a driving and a driven shaft with only a limited relative motion between its rotating parts.

According to the present invention, a coupling for transmitting drive between first and second substantially parallel rotating shafts, the axes of said shafts being mutually offset in use, comprises a floating member supported from said shafts by respective parallelogram linkages extending in planes substantially normal to said shafts, such that said floating member defines first and second points, fixed with respect to the floating member, whose loci are circles centred on the axes of said first and second shafts respectively, said points being separated by a distance which is substantially greater than said offset. As will subsequently be explained, by arranging the parallelogram linkages so as to define these two distinct points (which themselves define the position and orientation of the floating member) the floating member is constrained to orbit the shaft axes whilst substantially maintaining the configurations of the parallelogram linkages, provided that the offset between the shaft axes is small. Consequently only minor torsional oscillations need be accommodated at the pivot points of the linkages, in comparison with the $360^{\circ}$ rotations which occur in the Schmidt coupling even when the shaft axes are almost coincident.

By incorporating the floating member in respective parallelogram linkages, rather than Watt linkages as in the other known coupling referred to hereinabove, the coupling of the present invention is enabled to freely accommodate any offset below a well defined limit.

Preferably the floating member defines mutually orthogonal links of the respective parallelogram linkages, in order to decouple translation and rotation of the shafts.

The parallelogram linkages may incorporate means (such as flexible bushings at the pivot points) for allowing limited freedom of movement of the parallelogram linkages outside their planes of rotation, in order to allow relative movement of the shafts along their axes.

One of the shafts may be a quill shaft, the other shaft being accommodated within the quill shaft and the floating member surrounding said other shaft.

The invention will now be described by way of example only, with reference to Figures 1 to 8 of the accompanying drawings, of which:

Figure 1 is a diagrammatic representation of a known torque coupling;

Figure 2 is a diagrammatic representation (not to scale) of the Schmidt coupling;

Figure 3 is a diagrammatic representation of a preferred coupling in accordance with the invention;

Figure 4 is a diagram illustrating the required geometry of couplings in accordance with the present invention;

Figure 5 is a diagrammatic representation of the motion of a coupling in accordance with the invention;

Figure 6 is a radial section (taken on $\overline{VI}$-$\overline{VI}$ of Figure 7) showing the coupling of Figure 3 in a quill drive arrangement for a powered railway bogie;

Figure 7 is a split axial section taken $\overline{VII}$-$\overline{VII}$ of Figure 6, and

Figure 8 is a section taken on $\overline{VIII}$-$\overline{VIII}$ of Figure 6 showing a pivotal connection to the floating member.

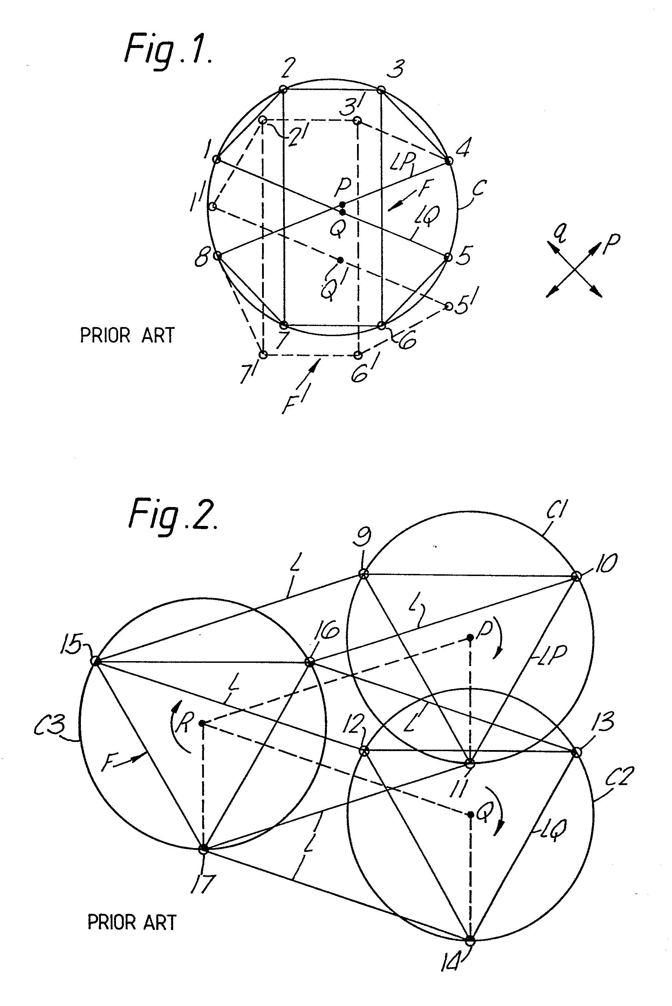

Referring to Figure 1, an arm LP carrying pivots 4, 8 is mounted on a drive shaft P and a similar arm LQ carrying pivots 1, 5 is mounted on a driven shaft Q. Shafts P and Q are coupled by a rectangular floating member F which carries pivots 2, 3, 7 and 6 and is supported by links between pivots 1, 2; 3, 4; 5, 6 and 7, 8. Floating member F rotates in a plane intermediate the planes of rotation of arms LP and LQ and in the position shown in solid lines (in which the axes of shafts P and Q are coincident) the axes of pivots 1 to 8 lie in a regular octagonal array and rotate in a common circle C as shown. The linkage between arm LP and floating member F at pivots 3, 4, 7 and 8 can be considered as a Watt linkage which constrains floating member F to substantially maintain its orientation relative to arm LP but allows it to move in the direction p (relative to shaft P) as shown. Similarly the linkage between arm LQ and floating member F allows the floating member to move in the perpendicular direction q (relative to shaft Q). Consequently it might be expected that shaft Q would be free to move in any direction with respect to shaft P, for example to position Q', carrying floating member F to a new position F' as shown in dashed lines. Unfortunately however the geometry of the arrangement is such that this lateral translation of shaft Q to position Q' could only be achieved by stretching the links between the pivots, so that the distance between pivot positions 1', 2' is greater than the distance between pivot positions 1, 2. A similar stretching would be required between pivot positions 3', 4; 5', 6' abd 7', 8. Consequently practical torque couplings utilising this geometry allow only a limited freedom of movement of the shafts and suffer from the disadvantages referred to hereinabove.

Figure 2 shows the Schmidt coupling, which comprises a floating member provided with an array of three pivot axes 15, 16 and 17 which define an equilateral triangle. A pivot carrier LP is attached to the drive shaft and rotates about its axis P in a plane behind the plane of the floating member F. A similar pivot carrier LQ is attached to the driven shaft and rotates about axis Q in a plane in front of the plane of floating member F. The pivot carriers are provided with arrays of three pivot axes 9, 10, 11 and 12, 13, 14 respectively. Arrays 9, 10, 11; 12, 13, 14 and 15, 16 17 are identical and are connected by identical parallel links L (which are shown exaggerated in length for the sake of clarity and must in fact be shorter than the distance between pivots 9 and 10, 10 and 11 etc.) By considering the parallelograms P, R, 17, 11 and Q, R, 17, 14 (where R is the mid-point of array 15, 16, 17) it can be seen that rotation of array 9, 10, 11 in the circle C1 causes floating member F to rotate which in turn causes array 12, 13, 14 to rotate in circle C2 about axis Q. The position of R is defined by the lengths RP and RQ and the positions of axes P and Q, so that member F rotates in a circle C3 which is fixed relative to P and Q. Any relative movement of the shaft axes P and Q will cause R to move to a new position about which floating member F will rotate in synchronism with the shafts. However, R is not defined when axes P and Q are coincident. Furthermore, each link L rotates 360° about its pivot axes for each rotation of the shafts and floating member, irrespective of the configuration of the axes R, P and Q. Therefore journal bearings are required at each of the pivot axes 9 to 16.

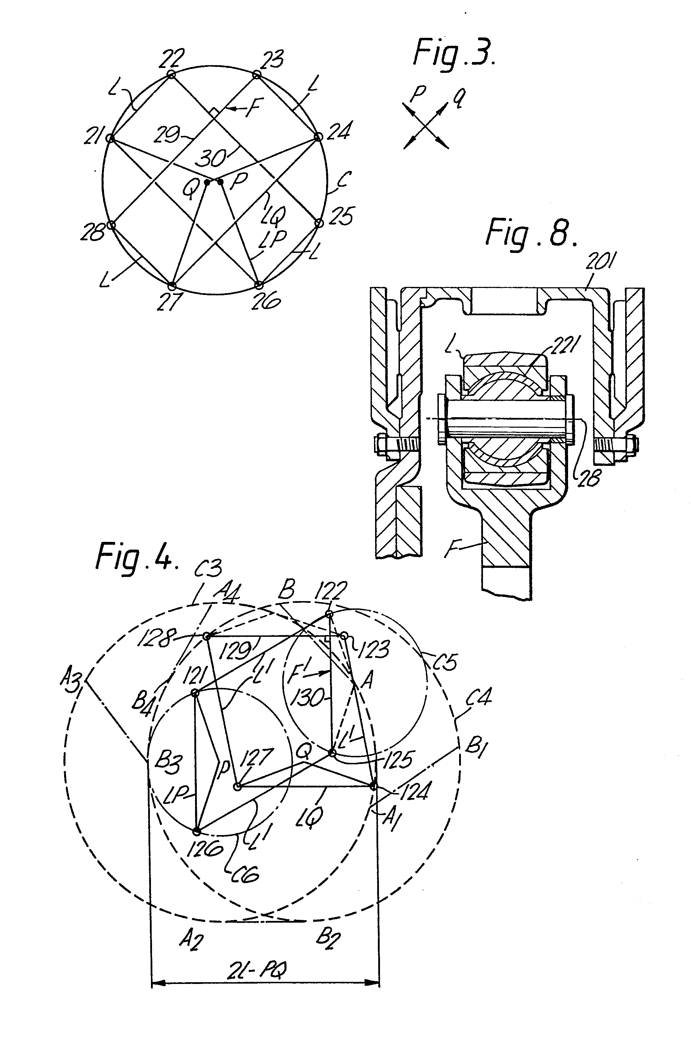

Figure 3 shows a coupling in accordance with the invention which is superficially similar to the coupling of Figure 1. Thus triangular pivot carriers LP and LQ are attached at their apices to the driving and driven shafts P and Q respectively (the shafts being shown slightly separated for the sake of clarity). A floating member F defines four pivot axes 22, 23, 28 and 25 and is represented skeletally in Figure 3 as two orthogonal rods 29 and 30 which are rigidly attached at their intersection. Floating member F is connected at pivots 22, 23, 28 and 25 by identical links L to pivots 21, 24 27 and 26 respectively on the pivot carriers, such that pivots 21, 22, 25 and 26 define a parallelogram linkage connecting shaft P to floating member F, and pivots 23, 24, 27 and 28 define a similar parallelogram linkage connecting shaft Q to floating member F. When the axes of shafts P and Q are coincident, the pivot axes 21 to 28 form a regular octagonal array as shown, floating member F lying in a plane intermediate the planes of rotation of LP and LQ. In the configuration shown, it is clear that shaft Q will rotate with shaft P, one link of each parallelogram linkage being under tension and the other being compressed. Thus in this configuration, all the pivots 21 to 28 rotate in circle C and there is clearly no rotation of the links L about their respective pivots. The ability of the coupling to accommodate a lateral offset between the shafts P and Q can best be understood by considering floating member F to be fixed. Shaft P, being connected to member F by a parallelogram linkage, is free to move along the line p as shown, whereas shaft Q is free to move along the orthogonal line q. If now P is considered to be fixed, it is clear that Q can move freely in any direction with respect to P, and that the position of floating member F is defined by the positions of P and Q. This agreement would still apply if rods 29 and 30 (and hence lines p and q) were not orthogonal, but in that case, relative movement of P and Q would in general require a rotation of the coupling. This would be undesirable in most applications.

Figure 4 shows a coupling similar to that shown in Figure 3 but with the shaft axes P and Q shown widely separated. A floating member F' is again shown in the form of a pair of orthogonal rods 129 and 130, identical links L' (of length 1) being provided to couple the floating member to the pivot carriers LP and LQ between pivot axes 121 to 128. Consider the point A, which is fixed relative to the member F', and defines a triangle A, 122, 125 which is identical to the triangle P, 121, 126. Because the quadrilateral P, A, 125, 126 is a parallelogram, the distance PA is fixed irrespective of the orientation of pivot carrier LP in its circle of rotation C6 (thus in the position shown, pivots 122 and 125 must move in a circle C5 centred on A). Because the distance PA is fixed the locus of A (i.e. the possible path of A for a fixed position of P) is a circle C3 centred on P. Similarly it can be shown that, for a fixed position of Q, the locus of a point B, fixed with respect to the floating member F' and similarly offset from rod 129, is a circle C4 centred on Q. The points A and B are fixed with respect to the floating member F' and therefore the line AB is of fixed length and moves with the member F'. The position and orientation of the line AB and thus of the floating member F', as the shafts P and Q rotate on their respective axes, are defined by the locus circles C3 and C4. Various positions of the floating member F', are indicated by the chain dotted lines $A_1 B_1$ to $A_4 B_4$.

Thus it can be seen that the floating member F' orbits about axes P and Q. For clockwise rotation of the shafts point A always leads point B and consequently any rotation of the links L' about their pivots is always less than $360^{\circ}$ and is oscillatory. Furthermore as axes P and Q approach one another, loci C3 and C4 merge and the torsional oscillation of the floating member relative to the links L' approaches zero. In general it can be shown that only torsional oscillation of less than $\pm 360^{\circ}$ will occur, provided that:

       i)   AB > PQ (PQ being the offset between the shaft axes)

       ii)  AB < $2l$-PQ where $l$ is the length of the links L'.

Thus AB must be less than $2l$ (or $l_1 + l_2$ if the links of the two parallelogram linkages are of different lengths $l_1$, $l_2$) and preferably AB is equal, or at least comparable to $l$ - say within $\pm 50\%$ of $l$. In the Schmidt linkage the distance AB is zero, as can be seen by referring to point R in Figure 2 which is coincident with points A and B as defined above.

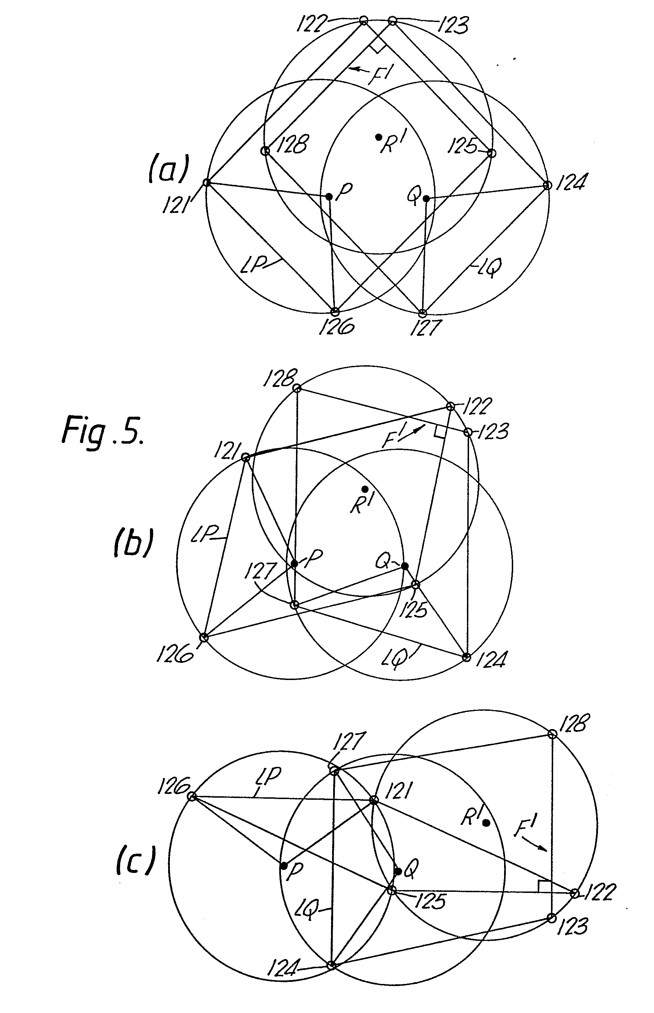

Figure 5 shows in a more concrete manner three stages in the clockwise rotation of the coupling of Figure 4. It can be seen that the intrinsic centre of rotation of floating member F' orbits axes P and Q, and that no $360^{\circ}$ rotation occurs at any of pivots 121 to 128. It will be appreciated that the distance PQ has been exaggerated for the sake of clarity.

It should be noted that although the links L, L' in Figures 3, 4 and 5 have been represented as rigid members pivoted at their ends, they could, for example, be in the form of resilient flexible strips fixed rigidly at their ends, since the parallelogram linkages need only change their configuration slightly as the coupling rotates, provided that the offset between the shaft axes is small in comparison with the length of the links. The links could even, in some applications, be in the form of thin flexible rods fixed rigidly at their ends and capable of bending in
two dimensions to accommodate both lateral and longitudinal
(axial) offsets between the shafts.

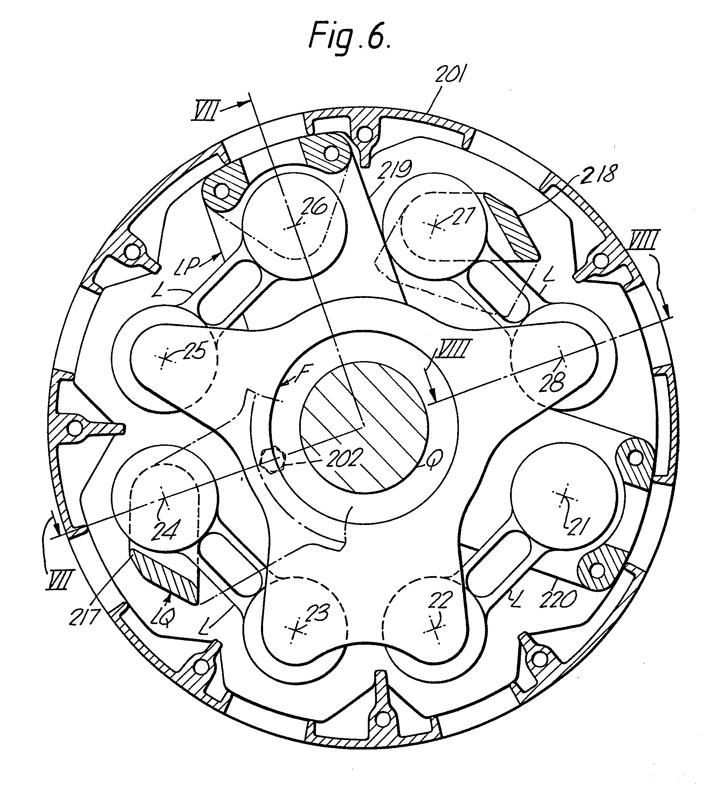

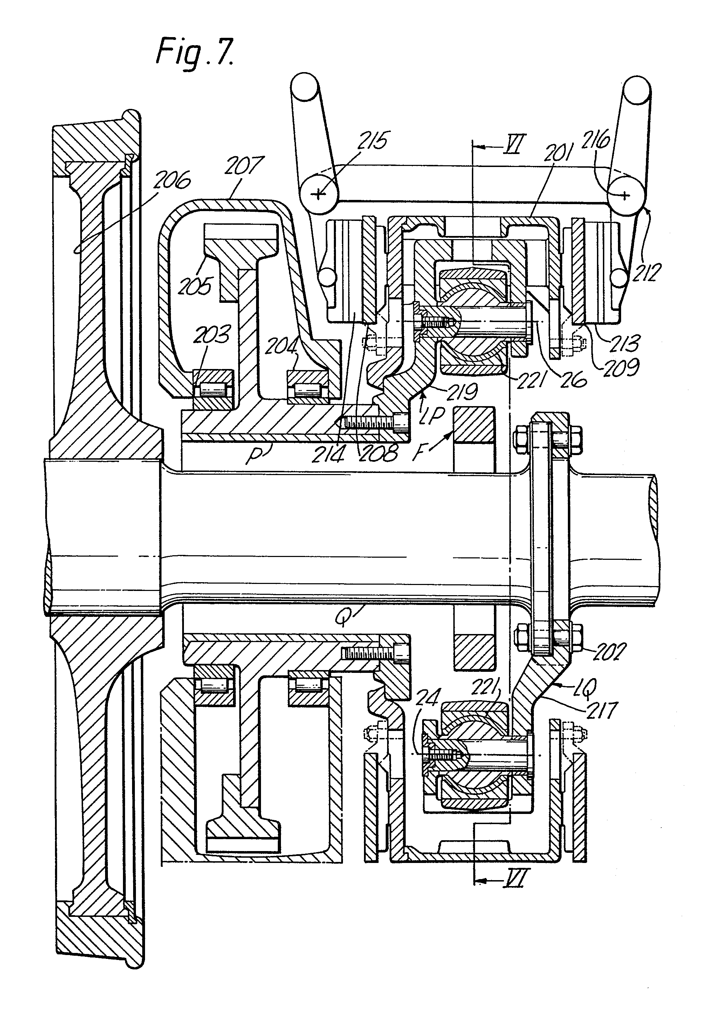

Figures 6 to 8 show the coupling of Figure 3 in
more detail.  Referring to Figure 7, a gearwheel 205 is
mounted within a gearcase 207 on bearings 203, 204 which
are rigid with the bogie, and is driven via an idler (not
shown) by a motor (not shown).  A hollow quill drive shaft
P is driven by the gearwheel 205 and carries a pivot carrier
LP, which is attached to a casing 201.  The axle Q of the
bogie wheelset carries a flanged bogie wheel 206 at each
end (only one end being shown) and is supported at is ends
by a resilient suspension (not shown) of conventional form
from the bogie frame.  Thus the axes of shafts P and Q are
nominally coincident but are liable to be laterally offset
by varying amounts due to vertical oscillation of the bogie
caused by unevenness in the railway track etc.   However,
the axes of shafts P and Q remain approximately parallel.

Shafts P and Q are coupled by a coupling in
accordance with the invention, comprising a floating ring
member F supported by four pivoted links L (Figure 6) in
the annular space between shaft Q and rotating casing 201.
As shown in Figure 6, ring member F is generally trapezoidal,
pivot axes 22, 23, 25 and 28 of the links being located at
its extremities.  As shown in Figure 8, the extremities of
ring member F are each in the form of a split bracket
which is connected to a link L by a resilient spherical
rubber bushing 221 of conventional form.  Each bushing 221
allows limited pivoting movement of its associated link (to
accommodate lateral offset of the shafts) and also allows
limited movement of the links out of their common radial
plane of rotation (to accommodate any slight axial movement
of the wheelset).

Ring member F is driven by a pivot carrier LP, which
rotates with casing 201 and comprises two arms 219 and 220
(Figure 6), the former being shown in Figure 7.  Each arm carries and partially encloses a spherical rubber bushing 221 identical to that shown in Figure 8, which is in turn attached to one of an opposite pair of parallel links L. This pair of links is thus incorporated with pivot carrier LP and floating ring member F in a parallelogram linkage.

A somewhat similar pivot carrier LQ comprises two arms 217, 218 bolted by bolts 202 (only one of which is shown) to the mid-point of shaft Q. Arm 217 is shown in detail in Figure 7 and carries a link L from a spherical rubber bushing 221 which is identical to the bushings already referred to. Thus pivot carrier LQ, floating ring member F and their associated parallel links L constitute a further parallelogram linkage coplanar with, but orthogonal to the parallelogram linkage between pivot axes 21, 22, 25, 26. The links L are each 270mm long and the coupling can accommodate vertical movement of the shaft Q of ± 40mm.

A transmission disc brake 212 (Figure 7) is provided and applies braking torque to casing 201 via pads 213, 214 which bear on cast iron annuli 208, 209. Annuli 208, 209 can be unbolted without disturbing the wheelset. The brake is supported at pivot axes 215, 216.

For high speed locomotives it is desirable to mount the traction motors from the body rather than the bogie. The primary suspension of a bogie affords no significant degree of lateral springing so that when travelling through curves at high speed, small irregularities of curvature at the rails are liable to generate large dynamic forces on the bogie. If the motors are mounted from the body sudden shocks at the wheelsets are not transferred to the motors or the body. However in known designs, the body mounted motors penetrate upwards above the body floor, encroaching on essential body space and thus placing onerous constraints on electrical equipment design and access, and inhibiting the freedom to walk between the two driving compartments. The flexible drive of the invention enables the traction motors together with their transmission disc brakes to be bolted to the underframe of the locomotive body so that they project downwards into the bogie frame space. The motors are placed one on each side of the bogie with the final bevel drive situated on one side of the axle only. The flexible drive connects the bogie frame mounted gearbox to the axle in a space which is generous for one flexible drive, but which is inadequate for a tubular quill or cardan shaft around the axle.

## CLAIMS

1. A coupling for transmitting drive between first and second substantially parallel rotating shafts (P, Q), the axes of said shafts being mutually offset in use, comprising a floating member (F) supported from said shafts by respective parallelogram linkages (L) extending in planes substantially normal to said shafts, such that said floating member defines first and second points (A, B) fixed with respect to the floating member, whose loci are circles centred on the axes of said first and second shafts respectively, characterised in that said points are separated by a distance which is substantially greater than said offset, the floating member thus being constrained to orbit the shaft axes whilst substantially maintaining the configurations of the parallelogram.

2. A coupling according to Claim 1 wherein the floating member defines mutually orthogonal links of the respective parallelogram linkages, in order to decouple translation and rotation of the shafts.

3. A coupling according to Claim 1 or 2 wherein said parallelogram linkages incorporate means (221) to allow limited freedom of movement of the parallelogram linkages outside their planes of rotation, in order to allow relative movement of the shafts along their axes.

4. A coupling according to any preceding claim wherein one of the shafts is a quill shaft, the other shaft being accommodated within the quill shaft and the floating member surrounding said other shaft.

5. A locomotive incorporating a flexible drive according to any preceding claim and having traction motors rigidly fixed to the underframe of the locomotive body which project downwards into the bogie frame space and do not encroach to any substantial extent into the locomotive body space.

1/5

0196859

## Fig.1.

PRIOR ART

## Fig.2.

PRIOR ART

**Fig.3.**

**Fig.8.**

**Fig.4.**

Fig .5.

## Fig.6.

Fig.7.